# EUROPEAN PATENT APPLICATION

(11) **EP 4 067 736 A1**
(43) Date of publication of application: **05.10.2022**
(21) Application number: 22164294.5
(22) Date of filing: 25.03.2022
(51) Int. Cl.: F21V 21/04, F21V 17/16, F21S 8/02

(54) **POSITIONING PLATE**

(30) Priority: 30.03.2021 BE 202105240
(71) Applicant: B Lighted B.V., 2800 Mechelen (BE)
(72) Inventor: VERVLIET, Patrick Georgette Karel, 2800 MECHELEN (BE)
(74) Representative: Arnold & Siedsma

(57) **Abstract**

Method for placing a holder (1) in a ceiling (21), wherein the method comprises the steps of:
- providing a ceiling opening (22) with predetermined dimensions in the ceiling (21);
- providing a holder (1) with outer dimension suitable for fitting in the ceiling opening (22);
- connecting the holder (1) to a positioning plate (23) with outer dimensions which are considerably greater than the predetermined dimensions of the ceiling opening (22);
- inserting the holder (1) into the ceiling opening (22) until the positioning plate (23) touches the ceiling (21), all this such that the holder (1) is brought into a predetermined position;
wherein in the predetermined position the holder (1) protrudes from the ceiling (21) over a predetermined distance measured between a ceiling surface and a lower edge of the holder (1);
- clamping the holder (1) in the ceiling opening (22) in order to secure the holder (1) in the ceiling opening (22);
- removing the positioning plate (23) from the holder (1).

## Description

The present invention relates to the technical field of mounting or incorporating a functional module, for instance for mounting a light fixture such as a recessed spotlight on or in a ceiling or wall. More specifically, the invention relates to a method for placing a holder in a ceiling and a set of a holder and a positioning plate for building the holder into a ceiling.

Functional modules are already provided on a ceiling. This provision is typically carried out by one or more installers who have to fix the functional module to the ceiling. Different requirements are imposed here. For reasons of time pressure it is important that work can move along quickly, so the provision of the functional module must take place in a rapid manner. At the same time, it is important that the functional module is arranged at a predetermined position in a precise manner. This is because it is typical for architects and clients to hold the installer or a painter contributing to the provision of the functional module on a ceiling to high standards. One of these standards is that the functional module must be arranged at the correct position and finished neatly in order to present a meticulously finished result once the functional module is provided on the ceiling. There are presently not yet any techniques whereby all these requirements and standards can be met.

The object of the present invention is to provide a technique whereby a functional module can be provided on a ceiling or wall in a rapid and at the same time precise manner, and wherein a meticulously finished result can be achieved once the functional module is provided on the ceiling.

The invention provides for this purpose a method for placing a holder in a ceiling with the features of claim 1. More specifically, the method comprises the steps of: - providing a ceiling opening with predetermined dimensions in the ceiling; - providing a holder with outer dimension suitable for fitting in the ceiling opening; - connecting the holder to a positioning plate with outer dimensions which are considerably greater than the predetermined dimensions of the ceiling opening; - inserting the holder into the ceiling opening until the positioning plate touches the ceiling, all this such that the holder is brought into a predetermined position; - clamping the holder in the ceiling opening with at least one leaf spring in order to secure the holder in the ceiling opening; - removing the positioning plate from the holder.

The inventor has found that the holder can be positioned at a desired position in simple and rapid manner and that a meticulously finished result can be achieved in that a finish can be provided so that substantially only the functional module is visible.

This is because the holder can be positioned in the ceiling opening in a precise and at the same time simple manner using the positioning plate, so that the holder is arranged at a predetermined position in the holder opening and can be clamped there using the at least one leaf spring, preferably at least two spring plates, still more preferably at least three spring plates. Owing to the leaf spring, the holder can remain at the predetermined position in the ceiling opening independently, whereby an installer is able to provide the holder on the ceiling easily, rapidly and accurately. The predetermined position is chosen so that a lower edge of the at least one leaf spring is positioned at a predetermined ceiling surface - edge distance, wherein the ceiling surface - edge distance is measured between a ceiling surface and the lower edge of the leaf spring, and is at least 0.8 cm.

The ceiling surface - edge distance is typically provided to be greater than the thickness of the plaster and/or paint with which the whole is finished. In this way a meticulously finished result can be achieved, wherein substantially only the functional module is visible and such that, during clamping, the lower edge of the at least one leaf spring only makes contact with the construction material of the ceiling, for instance concrete or plasterboard, and does not make contact with the finishing material such as plaster.

It is also the case that, because the holder is connected to the positioning plate, it is easier for an installer to insert the holder into and position it in the ceiling opening. The positioning plate can be held more easily than the holder and allows for simple insertion of the holder into the ceiling opening. Simplicity and ease of handling are desirable, especially in the case where an installer must provide a functional module on a ceiling, above head height. It is additionally the case that, because the holder is clamped in the ceiling opening with the at least one leaf spring, the holder remains fixed independently and neatly at the correct position.

It is preferably the case that the method further comprises of providing a spacer on the positioning plate in order to influence the predetermined position. This is because the spacer allows the predetermined position to be set in simple and rapid manner. This is desirable when it is desired to adjust the determined position in accordance with a suitable thickness of plasterwork and/or paintwork. The thicknesses can differ in accordance with the properties of the ceiling and/or structures in the vicinity of the ceiling opening, for instance in the case where it is desired to cover a support beam with plasterwork as well.

It is preferably the case that the method comprises of selecting a spacer from a set of spacers with different dimensions in order to realize the predetermined distance when the spacer of the positioning plate touches the ceiling. The predetermined distance between the ceiling surface and the lower edge of the holder can hereby be adjusted as desired. The determined distance can thus for instance be set in accordance with the properties of the ceiling or the wall and/or set in accordance with the thickness of the plaster layer and/or paint layer with which the whole is finished.

It is preferably the case that the spacers are formed by sets of strings with different string thicknesses. In this way the predetermined position of the holder can be set in simple and rapid manner by selecting a string with a desired string thickness.

It is preferably the case that the step of clamping comprises of fixedly clamping in radial direction with at least one leaf spring, preferably at least two spring plates, still more preferably at least three spring plates provided along an outer surface of the holder. The spring plates ensure that the holder can be secured in the ceiling opening in simple and rapid manner without additional tools and/or time-consuming fixing techniques having to be used. The leaf spring has the advantage that an initial tension can be provided so that the holder can be clamped in the ceiling opening. At least two spring plates are preferably used so that the holder can be clamped centrally in the ceiling opening. Still more preferably at least three spring plates for reasons of stability and fixation, so that the holder can be provided neatly in the ceiling opening and can secure itself there in stable manner by clamping. The spring plates are preferably distributed substantially symmetrically relative to the holder.

It is further preferred for the step of clamping to comprise of tightening one or more screw elements in order to push the at least one leaf spring radially outward. By pushing the spring plates radially outward with the screw elements it is possible to ensure that the holder can secure itself firmly in the ceiling opening. This has the advantage that the holder and the functional modules cannot be removed from the ceiling opening accidentally, for instance by the force of gravity or another force with the ability to remove the functional module and/or the holder from the ceiling opening. By combining the screw elements with the spring plates it is ensured that little to no damage is done to the ceiling, particularly on the inner surface of the ceiling opening. This also reduces the risk of damage to the plasterwork and/or paintwork. This is because screw elements per se cause a point load at the position where the screw elements make contact with and/or turn into the inner surface of the ceiling opening. In cases where ceilings have a determined brittleness cracks may occur due to this point load, particularly in cases where a screw element is turned into a brittle matter. By combining the screw elements with the spring plates the point load is distributed over the surface of the leaf spring, whereby less or no damage occurs.

It is preferably the case that the method further comprises of placing a functional module in a holder opening of the holder. Examples of functional modules are light fixtures such as ceiling spotlights. Security cameras and the like can also be provided as functional module.

A further aspect of the invention provides a set of a holder and a positioning plate for building the holder into a ceiling with a ceiling opening with predetermined dimensions, wherein the holder has outer dimensions so that the holder is placeable in the ceiling opening; wherein the holder comprises at least one leaf spring for clamping itself in the ceiling opening; wherein the holder has a holder inner surface which defines a holder opening in which a functional module is mountable; and wherein the positioning plate has outer dimensions which are considerably greater than the predetermined dimensions of the ceiling opening so as to position the holder at a predetermined position and such that a lower edge of the at least one leaf spring is positioned at a determined ceiling surface - edge distance, wherein the ceiling surface - edge distance is measured between a ceiling surface and the lower edge of the leaf spring and is at least 0.8 cm.

Using the set the functional module can be provided on ceiling in rapid and simple and at the same time precise manner. The whole, being the holder and/or the holder with the functional module, can in addition be meticulously finished. The skilled person will appreciate that the advantages and effects as explained above in respect to the method also apply to the set of the holder and the positioning plate. This is because it is the case that the holder can be inserted into the ceiling opening in a simple and at the same time precise manner using the positioning plate. Using the positioning plate the holder can be inserted easily and precisely into the holder opening at a desired position using the leaf spring and the holder can be allowed to secure itself there independently using the leaf spring. Because the determined ceiling surface - edge distance of at least 0.8 cm is provided, it is ensured that the leaf spring only makes contact with the construction material of the ceiling opening and does not make contact with finishing material such as plasterwork and/or paintwork. Because the at least one leaf spring clamps only against inner walls of the ceiling opening, the holder is not only firmly secured, but also arranged on the ceiling with minimal damage.

It is preferably the case that the holder is provided with at least three spring plates which are distributed over and extend along the holder outer surface in order to clamp the holder fixedly in the ceiling opening. The three spring plates provide for a desired positioning of the holder and improve the arranging and the fixation of the holder in the ceiling opening. The at least one leaf spring, preferably at least two, still more preferably at least three spring plates, ensure that the holder remains in the ceiling opening independently when the positioning plate is removed after arranging.

It is preferably the case that the spring plates each have a first zone lying against and being connected to an upper surface of the holder; and each have a second zone floating alongside a holder outer surface of the holder in order to provide a first initial radial tension when the holder is being placed in the ceiling opening.

In an embodiment it is the case that the outer dimensions of the positioning plate are selected such that the holder protrudes from the ceiling over a predetermined distance measured between a ceiling surface and a lower edge of the holder. This method ensures that the holder can protrude from the ceiling surface over a predetermined distance. A meticulously finished result can hereby be achieved, typically by providing plasterwork and/or paintwork around the lower edge of the holder. The determined distance over which the holder protrudes from the ceiling is typically chosen such that it corresponds to a thickness of a plaster layer and/or paint layer whereby an installer finishes the whole. Hereby, the holder is neatly concealed and substantially only the functional module is visible.

It is preferably the case that the positioning plate is provided with one or more spacers in order to provide the predetermined distance. The one or more spacers influence the predetermined distance over which the holder protrudes from the ceiling surface. In addition, it is the case that the spacers are simple to manufacture from a production engineering viewpoint and are provided on the positioning plate in simple manner. It is preferably the case that the one or more spacers comprise one or more string cords having predetermined thicknesses, preferably the same thickness, in order to provide the selected distance. It is preferably the case that the string cords are configured so that the string cords are exchangeable on the positioning plate. The string cords can thus be selected in accordance with the desired predetermined distance over which it is desired for the holder to protrude from the ceiling surface. Because the string cords are provided exchangeably on the positioning plate, the predetermined distance can be set and/or adjusted in accordance with the installer's requirements for achieving a meticulously finished result. At least two string cords with a determined thickness are preferably arranged on either side of the holder when the holder is inserted into the ceiling opening. By selecting string cords with a determined thickness the installer can influence the distance over which the holder protrudes from the ceiling surface.

It is preferably the case that the positioning plate is further provided with a first connecting element for being connected removably to the holder. Using the connecting element, an installer can thus provide a fixed connection between the positioning plate and the holder at the moment that the holder is inserted into the ceiling opening. The fixed connection increases the manageability of the holder and positioning plate, and the fixed connection facilitates insertion of the holder into the ceiling opening. After the holder has been inserted into the ceiling opening the connection between positioning plate and holder can be broken so that the positioning plate can be removed and only the holder remains stuck in the ceiling opening.

It is preferably the case that the positioning plate is provided with at least two connecting elements so as to be connected removably to the holder, and wherein at least one of the two connecting elements is arranged movably on the basic structure in order to move over and/or through the basic structure. In this way the positioning plate can be adapted in accordance with the dimensions of the holder. The same positioning plate can hereby be used to insert different types of holder into a ceiling opening. Different types of holder typically have different dimensions, for instance holders with holder openings with different diameters. Because at least one of the connecting elements is arranged movably, for instance using a slide rail, the connecting element can be adapted to the type of holder and the dimensions thereof.

It is preferably the case that the holder inner surface is provided with one or more centring pin openings, and wherein at least one of the at least two connecting elements is provided with a centring pin, preferably two of the at least two connecting elements are provided with a centring pin, and wherein the centring pin has dimensions smaller than dimensions of the one or more centring pin openings so as to be placeable therein. Because the centring pin of the connecting element of the positioning plate is placeable in the corresponding centring pin opening of the holder, it is the case that the removable connection between positioning plate and holder is improved when the centring pin is placed in the centring pin opening. In this way the manageability of the positioning plate with the holder connected removably thereto is improved. The holder remains fixed to the positioning plate better in this way. The centring pin also ensures that the holder can be repositioned in the ceiling opening if necessary.

It is preferably the case that at least one, preferably at least two of the at least two connecting elements comprise a first portion and a second portion which are mutually connected with a screw pin in order to clamp a part of the positioning plate between the first and second portion. In this way the connecting elements can be clamped relative to the positioning plate in order to enable the removable connection between holder and positioning plate to be fixed. This allows the manageability of the positioning plate and holder to be increased in order to enable easy insertion of the holder into the holder opening.

The invention will now be further described on the basis of exemplary embodiments shown in the drawings.

In the drawings:
Figure 1 shows a holder in a ceiling opening, wherein the holder holds a functional module;
Figure 2A shows a perspective view of a positioning plate and a holder;
Figure 2B shows a side view of a positioning plate and a holder;
Figure 2C shows a top view of a positioning plate and a holder;
Figure 3A shows a cross-sectional view of a positioning plate, a holder and a ceiling opening;
Figure 3C shows a cross-sectional view of a positioning plate according to an embodiment.

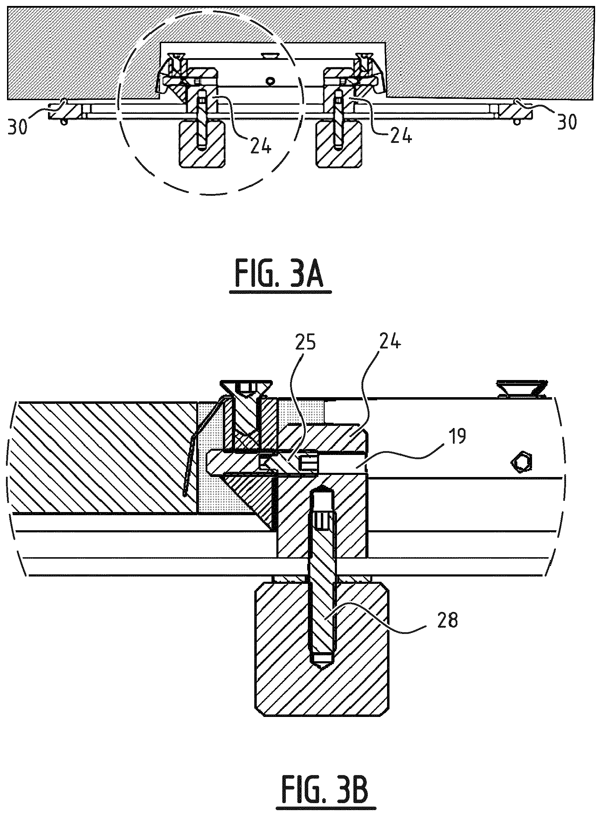

Figure 3B is a part of the cross-sectional view shown in figure 3A with more detail;

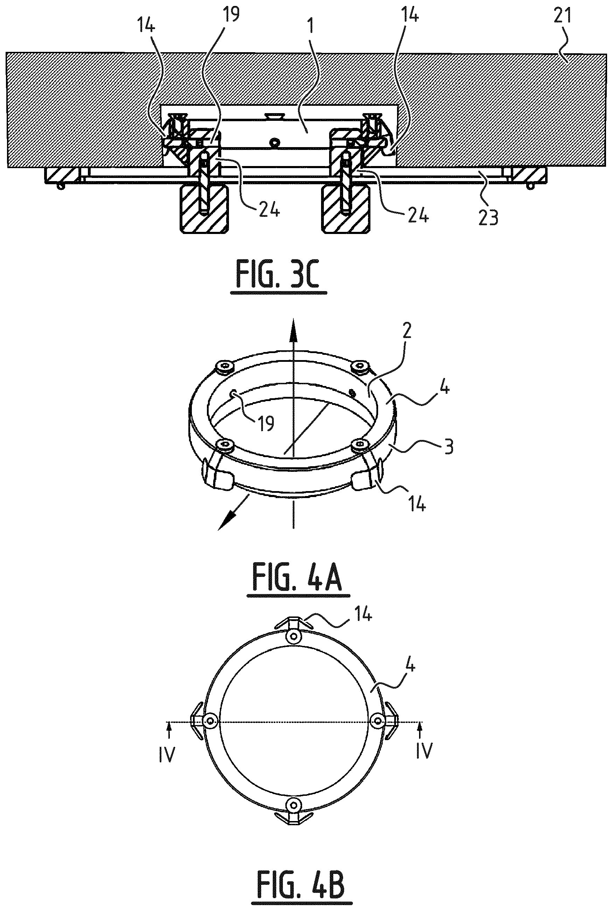

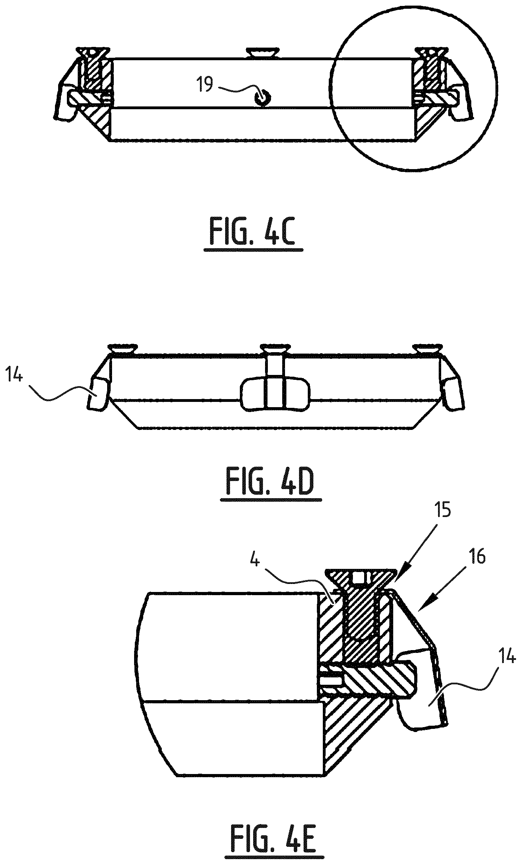

Figures 4A-4B show a holder, figure 4A shows here a perspective view of a holder; Figure 4B shows a top view of the holder and with section line IV; Figure 4C shows a cross-section through the section line IV; Figure 4D shows a side view of the holder; Figure 4E shows a part of the cross-section shown in figure 4C with more detail;

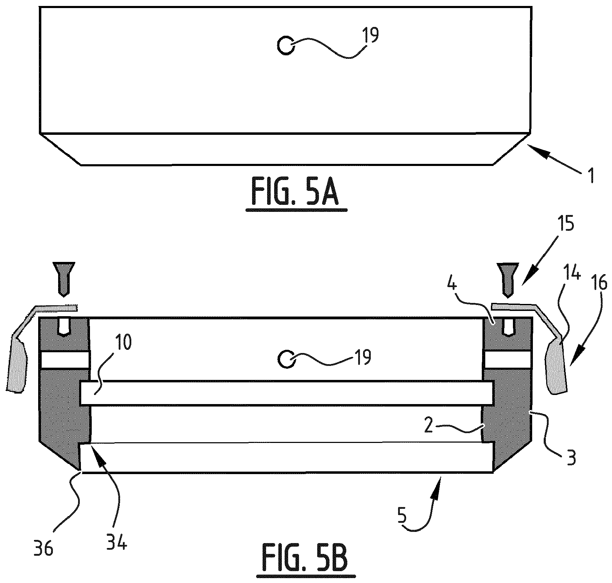

Figure 5A shows a side view of a holder;
Figure 5B shows a schematic cross-sectional view of a holder, an insert and spring plates;

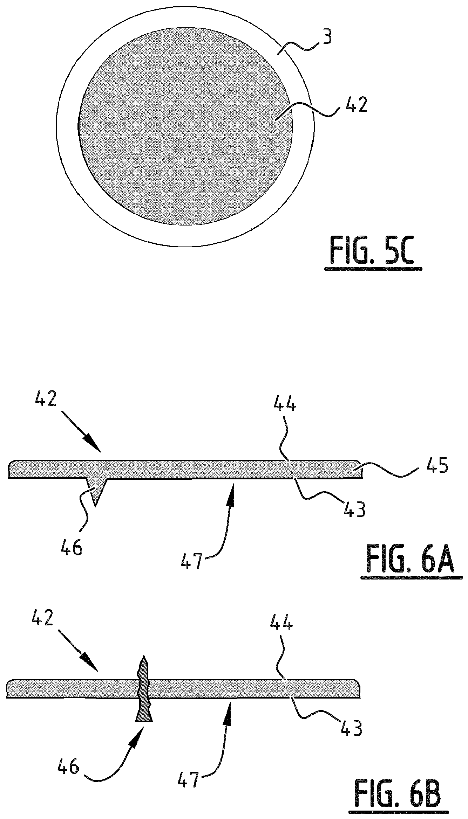

Figure 5C show a bottom view of a holder and an insert;
Figures 6A and 6B show cross-sections of an insert;

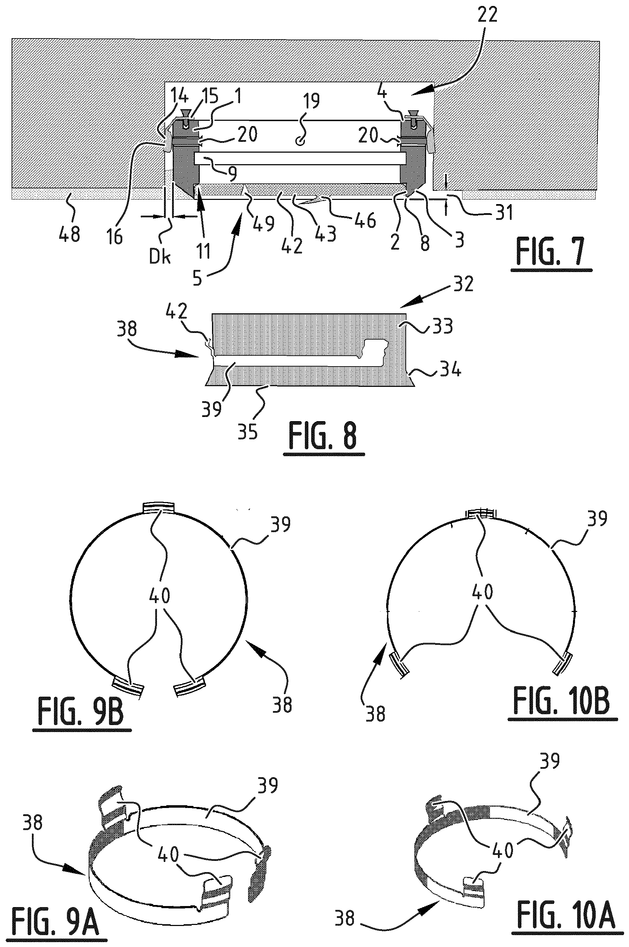

Figure 7 shows a cross-sectional view of a holder in a ceiling opening;
Figure 8 shows a side view of a functional module and a mounting spring;
Figure 9A shows a perspective view of a mounting spring in a first mode;
Figure 9B shows a top view of a mounting spring in a first mode;
Figure 10A shows a perspective view of a mounting spring in a second mode;
Figure 10B shows a top view of a mounting spring in a second mode;

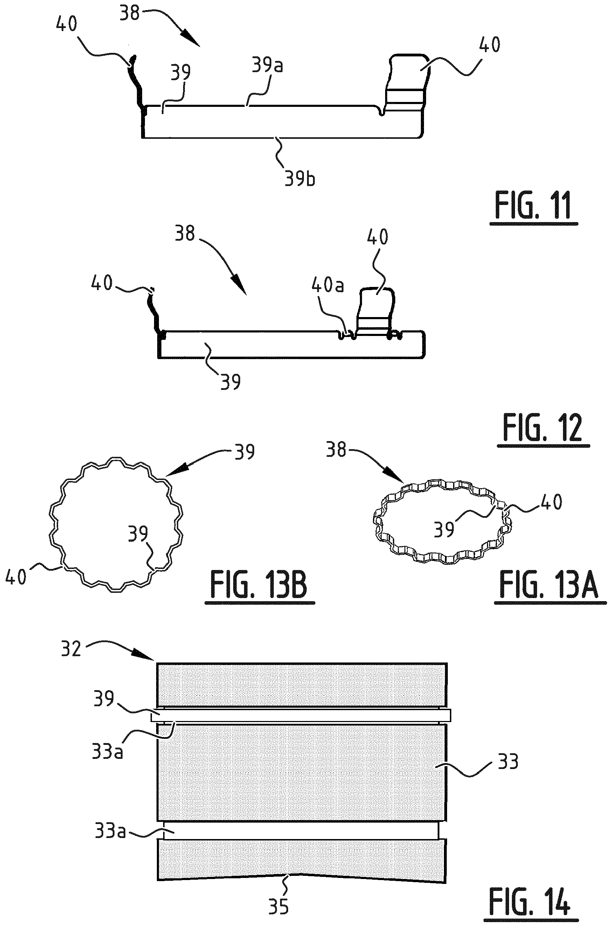

Figures 11 and 12 show embodiments of a mounting spring in side view;
Figure 13A shows an embodiment of a mounting spring in perspective view;
Figure 13B shows a top view of the mounting spring shown in figure 13A; and
Figure 14 shows a side view of a functional module.

The same or similar elements are designated in the drawings with the same reference numerals.

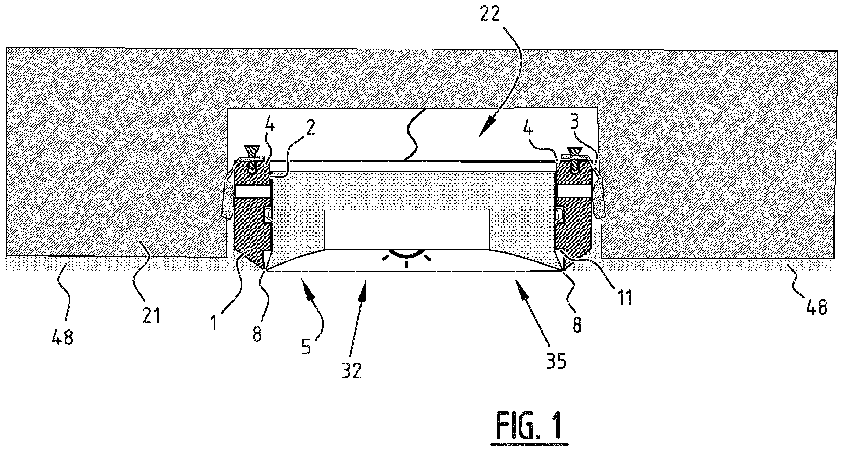

Figure 1 shows a cross-section of a functional module 32. The functional module 32 has a visible surface 35. Functional module 32 can take the form of a recessed spotlight. Functional module 32 can alternatively be formed by a surface-mounted light fixture, wherein the visible surface is an outer surface of the light fixture. The figure shows that the plasterwork and/or paintwork 48, which forms the finishing layer of ceiling 21, runs substantially all the way up to the visible surface 35. In other words, the functional module is built into ceiling 21 in substantially frameless manner. This frameless incorporation of a functional module in a ceiling was an objective that was part of what resulted in the invention. A further objective that also resulted in the invention is the removability and/or replaceability of the functional module in ceiling 21. In order to realize this a holder 1, further described below, was developed. In the description below the components are frequently described with an underside and an upper side. It will be apparent here that the underside and upper side are those sides lying respectively at the bottom and at the top of the component in normal use in incorporation in a ceiling.

Holder 1 has a holder opening 5 which is defined substantially by the holder inner surface 2. More specifically, the holder inner surface extends through the whole holder 1 between the underside and upper side. The holder has a holder outer surface 3 which is formed to fit in a ceiling opening 22 of a ceiling 21. For this purpose the holder outer surface 3 has a form and dimensions which are a predetermined size smaller than a form and dimensions of the ceiling opening 22.

The holder outer surface 3 and the holder inner surface 2 preferably have a substantially circular section so that the holder is substantially cylindrical. This allows a functional module 32 with a substantially round form to be placed in holder opening 5. The diameter of ceiling opening 22 is preferably at least 3 mm greater, more preferably at least 5 mm greater, most preferably about 6 mm greater than the diameter of the holder outer surface 3. This is because this ensures that finishing material has sufficient creep space to creep between the holder outer surface and the ceiling opening. The distance between holder outer surface and ceiling opening is preferably at least 1.5 mm, more preferably 2.5 mm, still more preferably at least 3 mm. In this way a fixation of the holder can be provided with the finishing material, preferably an additional fixation in addition to the fixation and/or clamping by means of the spring plates 14 or other mechanisms. The diameter of ceiling opening 22 is preferably a maximum of 20 mm greater, more preferably a maximum of 17 mm greater than the diameter of the holder outer surface 2. This allows plaster material to creep between the ceiling and the holder to sufficient extent, particularly when finishing the plasterwork and paintwork, and to thereby realize a good adhesion. At the same time, this does allow sufficient clamping and securing of the holder in the opening with the spring plates 14 described below or other mechanisms.

Figure 1 shows that the functional module has a mounting outer surface which is complementary to the holder inner surface 2 so it fits therein. Functional module 32 is typically connected to a fixed wiring. More specifically, the phase line and the neutral line are in particular connected to functional module 32. The earth line is preferably connected to holder 1. Functional module 32 is hereby also earthed indirectly because functional module 32 comes into physical contact with the holder inner surface 2 of holder 1.

The holder outer surface 3 and the holder inner surface 2 converge at the bottom at the position of an edge 8. The edge 8 is preferably an acute edge 8 having an angle smaller than 70 degrees, preferably smaller than 60 degrees, more preferably smaller than 50 degrees. The angle is preferably also greater than 30 degrees, more preferably greater than 40 degrees. The holder outer surface preferably extends outward and upward from acute edge 8. Holder inner surface 2 preferably extends upward from acute edge 8. This specific choice allows holder 1 to be incorporated in a ceiling 21 in simple manner, more specifically to easily carry out plastering work and/or painting work up to acute edge 8. Because the lower edge 8 is acute, it will be visible to only limited extent in the finished state of the holder so that, when a functional module 32 is built in, the visual impression is created that this functional module 32 is in the ceiling in frameless manner.

Functional module 32 can take different forms. In the embodiment shown in figure 1 functional module 32 has an inward directed form. The functional module hereby also has an acute edge at the position of edge 8 in mounted form. This creates the visual effect that the functional module is mounted directly in the ceiling. This is only possible when the holder inner surface 2 extends upward from acute edge 8 for at least 2 mm, preferably at least 3 mm, more preferably at least 4 mm before forming an inward step 11. This is because visible surface 35 will always lie at a distance from holder inner surface 2, with the exception of edge 8. Were holder inner surface 2 thus to have an inward step 11 too close to the edge, it would be impossible to have an inward-curved visible surface 35. In other words, it would be impossible to achieve a frameless effect.

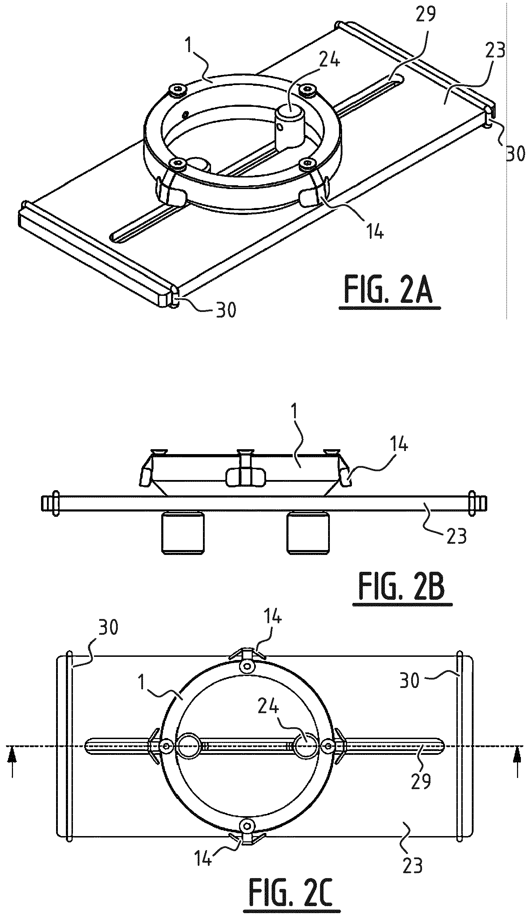

Figure 1 shows a difference between the ceiling element in which the opening is provided on the one hand and the plaster and/or paintwork on the other. Practical tests have shown that it is extremely difficult or even almost impossible to apply in particular plasterwork when the lower edge 8 of holder 1 lies in the plane of the ceiling element. Tests have shown that crack lines or fracture lines become visible when the plaster between the ceiling element and the holder hardens. When the lower edge 8 protrudes slightly from the plane of the ceiling element, it has been found that the tendency of the plaster to crack and fracture decreases significantly. This shows that the placing of holder 1 in the ceiling is preferably done accurately and with a predetermined position of holder 1 relative to the ceiling element. This will be explained with reference to figures 2 and 3.

Figures 2a, 2b and 2c show different views of the same positioning plate 23 for positioning a holder 1 relative to a ceiling. Figure 2a shows here a perspective view, figure 2b shows a cross-section and figure 2c shows a top view. The positioning plate 23 has dimensions which are considerably greater than the dimensions of the ceiling opening 22 so that positioning plate 23 can extend over the ceiling opening and rest on ceiling 21 on either side of ceiling opening 22. The ceiling opening is shown as a beam-like element. This is advantageous when a holder must be placed at the position of an edge of the ceiling. In such a situation the positioning plate 23 can be placed with its long side toward the edge so that the holder is placeable close to the edge. Positioning plate 23 can alternatively be circular, with a diameter considerably greater than ceiling opening 22.

Before placing holder 1 in ceiling opening 22, holder 1 is connected to the positioning plate 23. In the shown embodiment positioning plate 23 has two connecting elements 24. The connecting elements 24 can be placed into holder opening 5 and pressed apart so as to clamp holder 1 at/on its holder inner surface 2. For this purpose connecting elements 24 are provided on a guide 29 in positioning plate 23. The guide takes the form of a slot. Each connecting element 24 has a screw pin at the bottom. By tightening the screw pin the connecting element 24 is fixed to the positioning plate. The skilled person will appreciate that the positioning plate is clamped between the screw pin and the connecting element so that the connecting element will no longer move relative to guide 29 due to this clamping. Each connecting element is preferably provided with a centring pin 25. The centring pin 25 is placed such that it is aligned with a centring pin opening 13 of holder 1 when the holder 1 is positioned correctly relative to positioning plate 23. When centring pin 25 engages in the centring pin opening 13 by pressing connecting element 24 apart and thereby clamping holder 1 onto its holder inner surface 2, the connection between the positioning plate and the holder is ensured in a predetermined relative position.

The shown embodiment is just one preferred embodiment. Other embodiments can also be envisaged. In one embodiment the guide 29 is only provided for guiding one of the two connecting elements 24, while the other connecting element is fixed on positioning plate 23. According to another embodiment, the positioning plate is provided with one or more clamps for fixedly clamping holder 1 in a predetermined position relative to positioning plate 23. According to yet another embodiment, the positioning plate is provided with one or more bolts or screws which are complementary to bolt holes or screw holes on the holder so as to temporarily screw the holder fixedly onto positioning plate 23.

The guide 29 preferably has a length of at least 5 cm, more preferably of at least 10 cm, most preferably of at least 15 cm. By increasing the length of the guide holders with different diameters can be clamped by one and the same holder. This makes it easier for an installer to place holders. More specifically, an installer can place holders with different dimensions using one positioning plate.

The positioning plate is provided to fixedly clamp the holder in a central zone of the positioning plate. On either side of the central zone the positioning plate is provided with a spacer 30. In the embodiment of figure 2 the spacer 30 is formed by a string cord of a predetermined thickness which ensures that when the positioning plate is pressed against the ceiling, the string cord holds the positioning plate at a predetermined distance from the ceiling. More specifically, the string cord will press against the ceiling so that the positioning plate is prevented from moving further toward the ceiling. In other words, the string cord will form a protrusion of the positioning plate with which the positioning plate knocks into the ceiling. Spacer 30 is preferably replaceable, i.e. another spacer 30 can be fastened on or at the positioning plate. Different spacers 30 here preferably also have different thicknesses, so that the distance of the positioning plate relative to the ceiling can also be controlled thereby. The string cords are preferably situated on either side of the central zone and preferably extend substantially on two different axes. With the two string cords the positioning element can be pressed against the ceiling in stable manner. The skilled person will appreciate that different alternatives can be envisaged. Three or more pointy spacers can thus be provided. These pointy spacers are placed in a triangle in order to keep the positioning element at a predetermined distance from the ceiling. In one embodiment the positioning plate is screwed against the ceiling. A spacer 30 is also realized by placing rings of a predetermined thickness between the positioning element and the ceiling. The combination of the fixed position of holder 1 relative to the positioning plate on the one hand and on the other the spacer which stops the positioning plate at a predetermined distance from the ceiling makes holder 1 placeable at a highly accurate position relative to the ceiling. This predetermined position is preferably one wherein the lower edge 8 of holder 1 protrudes a predetermined distance from the plane of ceiling 21. The advantage was elucidated above and is related to the possible cracking or fracturing of plaster.

Figure 3A shows a cross-section of a holder 1 with positioning plate 23 which is pressed against a ceiling 21. The figure shows that the positioning plate lies with its spacers against ceiling 21 such that the central zone of the positioning plate lies at a predetermined distance from ceiling 21. This predetermined distance is determined by the thickness of the spacers. The thickness of the spacer can also be substantially equal to 0 mm. In that case there is no spacer, or the thickness thereof is negligible. In determined embodiments of the invention the thickness is 0 mm, and the positioning plate will lie directly against the ceiling surface so that the lower edge of the holder lies in that ceiling plane. The positioning plate 23 lying directly against ceiling 21 is shown in figure 3C. The predetermined distance over which the lower acute edge of the holder protrudes from the ceiling surface in that case equals zero. Holder 1 is held against or at another predetermined position relative to the positioning plate such that holder 1 ends up in the desired position relative to ceiling 21. More specifically, holder 1 is placed in a position wherein the lower edge 8 of the holder lies a predetermined distance below the surface of ceiling 21. In this position the holder 1 is clamped in the ceiling opening 22 of ceiling 21 as described below.

Holder 1 is provided with leaf springs 14. In the embodiment as shown in figures 2 and 3 four leaf springs 14 are in each case provided, distributed substantially uniformly along the periphery of the holder outer surface. Leaf springs 14 lie with at least a portion at a distance from the holder outer surface in a rest state of the leaf springs 14, such that the dimensions of the holder outer surface plus the leaf springs in rest state are greater than the ceiling opening. Leaf springs 14 can be pressed toward the holder outer surface by an external force so as to reduce the dimensions of the holder outer surface plus the leaf springs in tensioned state to be smaller than the ceiling opening. The holder can thus be inserted into the ceiling opening when the leaf springs are tensioned. Because the leaf springs have a tendency to move back to their rest state, a clamping force of the holder in the ceiling opening is obtained. It is noted here that this clamping force results without any specific action on the part of an installer. Merely inserting the holder with the leaf springs into the ceiling opening ensures that the leaf springs clamp the holder at least partially in the opening. This makes it possible to press the holder into the ceiling opening with the positioning plate and to then release the positioning plate from the holder. The holder will be clamped in the ceiling opening by the leaf springs and remain positioned therein, in other words remain suspended therein, when the positioning plate is removed.

Figure 3B shows in detail a connecting element 24 with a centring pin 25. The connecting element is formed by a bar or tubular element extending upward from the positioning plate. Figure 3A shows that two of such connecting elements can both be placed into the holder opening. By sliding the connecting elements apart the holder can be fixedly clamped by the connecting elements. The connecting elements press against opposite holder inner surfaces. In order to facilitate the clamping of the holder with the connecting elements and to fix the relative position of the holder relative to the positioning plate, at least one of and preferably each of the connecting elements is provided with a centring pin. The centring pin is positioned on the connecting element such that it is complementary to a centring pin opening in the holder. Because the centring pin engages in the centring pin opening, both the relative position is known and undesired release of the holder from the positioning plate is impossible.

Figure 3B further shows that the connecting element is fixed via a screw pin. Screw pin 28 extends with a screw thread into the connecting element. The screw pin is provided at the bottom of the positioning plate with a handling part so that an installer can fix the connecting element relative to the positioning placed by hand, preferably without the use of tools. More specifically, the connecting element is pressed against the positioning plate by the tightening of the screw pin, this preventing further movement of the connecting element relative to the positioning plate. The skilled person will appreciate that this is only one of the many options for connecting a holder to the positioning plate. Other embodiments are also possible.

Figure 3A illustrates that a positioning plate is placeable over the ceiling opening on either side. This is because the positioning plate has dimensions which are considerably greater than the ceiling opening. The positioning plate is pressed up against the ceiling. Because the positioning plate is provided with spacers, these spacers will come to lie against the ceiling. The central portion of the positioning plate then remains at a distance from the surface of the ceiling. This distance is determined by the thickness of the spacers.

The spacers take the form of cords or strings which can be placed around and end of the positioning plate. The spacers can be selected from a set of different spacers with different thicknesses, each of which fit around an end of the positioning plate. By selecting the desired spacer, is thereby also possible to choose how far a central zone of the positioning plate will remain from the surface of the ceiling when the spacers are pressed against the ceiling. As elucidated above, the distance over which holder 1 is placed with its lower edge 8 away from the surface of the ceiling can be selected thereby. Further described above is that this considerably simplifies carrying out plastering work and painting work.

Figures 4A-4E show a holder with leaf springs in multiple views. Figure 4A shows a perspective view. Figure 4B shows a top view, Figure 4C shows a cross-section. Figure 4D shows a side view and figure 4E shows a detail section. These figures show an embodiment wherein four leaf springs are distributed substantially uniformly along the holder outer surface. The skilled person will appreciate that a basic clamping in an opening can be realized with one single clamping element or spring element. In order to realize a more stable clamping at least two clamping elements or spring elements are needed. At least three clamping elements or spring elements are preferably provided in order to achieve a balanced clamping in a ceiling opening. The at least three clamping elements are then preferably placed on the holder outer surface at substantially equal distances and/or angular positions relative to each other.

Each leaf spring is preferably formed as a plate element manufactured from a material selected from spring steel or plastic. The material is here preferably selected so as to allow bending and/or flexibility of the material in the elastic mode. This means that, in normal use, no noticeable plastic deformation of the leaf spring occurs. The leaf spring as shown in the figures is preferably connected to an upper surface 4 of the holder. The upper surface is the surface which extends in substantially lying orientation at the position of the upper side of the holder and thereby connects holder inner surface 2 to holder outer surface 3. The leaf springs preferably lie substantially flat against the upper surface and are connected thereto via screws. Alternatively, the leaf springs can be glued to the upper surface. As further alternative, slots extending in substantially lying orientation are formed in a side wall, and the leaf springs are placed into the slots and so connected to the holder in substantially lying orientation at the position of the slot. Because the leaf springs are connected in lying orientation to the holder, the leaf springs extend substantially horizontally outward from the holder outer surface. The leaf springs are here further preferably provided with a first zone 15 and a second zone 16. The first zone is the zone which is connected to the holder and which extends in substantially lying orientation. The second zone lies at a distance from the first zone, typically at a distance from the holder outer surface. The second zone is preferably placed at an angle relative to the first zone by plastic deformation of the leaf spring. The leaf springs hereby form together with the holder a conical or funnel-shaped assembly which can be inserted into a ceiling opening of a ceiling more easily owing to its shape.

The second zone of the leaf springs preferably takes a considerably wider form than the first zone of the leaf springs. A contact surface or stop surface of the leaf spring with the edge of the ceiling opening is hereby considerably greater. As seen in width direction, this second zone is preferably curved with a radius smaller than the radius of the holder outer surface in order to prevent the second zone from becoming caught when the holder with leaf springs is being inserted into the ceiling opening.

The holder has at the position of each leaf spring a drilled hole which extends from the holder inner surface to the holder outer surface. A screw element is provided in this drilled hole. The screw element can be turned from inside the holder. This allows the screw element to be turned outward from inside. The screw element will press against an inner side of the leaf spring in order to press the leaf spring outward. The clamping of the holder in the ceiling opening can hereby be ensured, more specifically by having the leaf springs press outward with a predetermined minimum force via the screw elements.

Just as the leaf springs are fixed to an upper side of the holder, an earthing cable (not shown) can also be connected to the upper side of the holder. When a functional module is then connected to the holder, the functional module is automatically also earthed, provided that the functional module is not incorporated in the holder in fully insulated manner. The axis of the drilled hole is preferably centred perpendicularly of the holder inner surface, in this way a screw element can be screwed through the drilled hole in order to push the leaf spring out. It is preferably the case that the drilled hole has an axis lying perpendicularly of the holder inner surface in order to push out the leaf springs in a direction perpendicularly of the holder outer surface. This reduces the chance of damage in that the clamping forces of the leaf springs and the screw element are distributed better.

Figure 5 shows a plurality of views of holder 1. Figure 5A shows a side view. Figure 5B shows a cross-section of the holder 1 with an insert placed in the holder opening. Figure 5C shows a bottom view of the holder opening with insert.

Figures 5A and 5B show that the holder outer surface extends obliquely upward from the lower acute edge. This creates at the position of the acute edge a space in the radial direction between the acute edge and the point of the holder lying radially furthest outward. This space allows the holder to be visually concealed with plaster and paint.

Figure 5B shows that the holder inner surface extends upward from the lower acute edge 36 over a determined distance and then has an inward step 34 before extending further upward. The thickness of the insert 42 is preferably smaller than the upward extension of the holder inner surface, the holder inner surface preferably extending from the lower acute edge over a determined distance of at least 2 mm. The thickness of the insert is preferably at least 0.2 mm smaller, preferably about 0.5 mm smaller, still more preferably 1.5 mm smaller than the determined distance over which the holder inner surface extends upward. This is because practical tests have shown that a neat finish of the whole can thus be provided. Figure 5B also shows that the drilled hole extends at the position of the leaf spring so that a screw element can be turned in the drilled hole in order to press the leaf springs outward. Figure 5B further shows the groove in the holder inner surface, which groove can be used to secure a functional module in the holder.

Figures 6A and 6B show a cross-section of an insert 42 according to preferred embodiments of the invention. The insert has an insert inner surface 44 and an insert outer surface 43. The surfaces extend substantially parallel alongside each other. The distance between insert inner surface and insert outer surface forms the thickness of the insert. The insert is manufactured from a flexible material and has outer dimensions which are a determined size greater than the dimensions of the holder opening. In this way the insert can be easily pressed into the holder opening by an installer or a painter so that at least a peripheral edge of the insert presses against the holder inner surface. In this way the space between the sides of the insert and the holder inner surface is neatly sealed so that the inner side of the holder opening is protected against plastering mortar and/or paint residues during finishing. The shape of the insert is preferably chosen such that the peripheral lateral surface of the insert, being the lateral surfaces between the insert inner surface and insert outer surface, presses at least partially and preferably presses over at least 50% of the thickness of the insert against the holder inner surface when the insert is placed in the holder. In the embodiment shown in figure 6A the insert tapers from the outer surface of the insert to the inner surface of the insert. This facilitates insertion of the insert.

The insert is manufactured from a flexible material. This material is chosen so that the insert can deform under pressure which can be provided in simple manner by an installer or a painter, for instance by pressing the insert using a thumb. The flexible material of the insert is typically chosen so that this material has a hardness smaller than the hardness of the holder at the position of the holder inner surface into which the insert is placed. The skilled person can measure the hardness using a durometer or an IRHD meter in accordance with the ISO 48 standard. Examples of materials for manufacturing the insert are: natural rubber, plastic, cardboard or compressed paper, compressed paper layers with optional gluing, or combinations thereof.

The insert can be provided with a protective layer (not shown). The protective layer is here chosen such that it is resistant to factors which may affect the integrity of the insert. An example here is a protective layer that is resistant to moisture and chemicals from finishing materials such as paint or plastering mortar. The insert is hereby protected. The protective layer is typically provided on the insert outer surface 43 of the insert. Suitable protective layers are plastic protective layer such as for instance PVC or PE layers. The protective layer preferably has a maximum thickness of 1.5 mm, preferably a maximum of 1 mm, still more preferably 0.5 mm. The protective layer is preferably provided on the insert as coating or as a sticker.

Figure 6A shows that insert 42 is provided with a protrusion 46 on the insert outer surface 43. The protrusion 46 increases the manageability of the insert and facilitates insertion and removal of the insert in holder opening 5. In figure 6B the insert is provided with a throughfeed element 46 which serves as protrusions. Because the insert can be provided with a protrusion, the protrusion can be arranged on the insert at a suitable moment, for instance after paint and/or plaster finishes have been applied. Throughfeed element 46, for instance a screw, has a greater hardness than the insert and is typically provided with a sharp point, and can hereby easily be introduced partially into the flexible material of the insert. Owing to the protruding portion of the throughfeed element, an installer and/or a painter can easily place the insert into the holder opening and easily remove the insert therefrom again. In order to facilitate finishing of the holder in the ceiling opening it has been found that it may be advantageous to be able to adjust the protrusion, for instance in height. This can be done by making the protrusion foldable or by providing the protrusion as a removable throughfeed element 46. An example of a removable throughfeed element is a screw. In cases where a paint roller is used during paint finishing the protrusion can be set such that it is possible to move the paint roller easily and rapidly over the ceiling surface and optionally all the way up to a central zone of the insert outer surface 43 and so provide the finish in a rapid and simultaneously precise manner.

Figure 7 shows a technique for providing the functional module 32 on ceiling 22. The ceiling opening 22 is typically provided first, for instance with a hole saw or hole cutter, to form a substantially circular ceiling opening. The skilled person will appreciate that other opening shapes are also possible. The dimensions of the ceiling opening, for instance the diameter, are chosen such that they are a predetermined size greater than the dimensions of holder 1, for instance the diameter of the holder. The objective is here to provide sufficient space between holder and ceiling opening so that the finishing material can be introduced therebetween to sufficient extent. The predetermined dimension between outer surface 3 of the holder and the side walls of ceiling opening 22 is preferably a minimum of 3 m, preferably at least 5 mm, so that there is about 1.5 mm to 2.5 mm of space on either side of the holder. This is because tests and simulations have shown that this space is advantageous in ensuring that finishing material such as plastering mortar can flow or creep between the holder and the ceiling opening to sufficient extent in order to fix the holder and/or improve the fixation of the holder in the ceiling opening. The plastering mortar itself will also have sufficient mass to adhere to the ceiling and to the holder on the one hand and, on the other, not to crack or fracture while hardening.

The holder 1 is then placed in ceiling opening 5, preferably using the above-described positioning plate 23. The holder is placed in the ceiling opening at a desired position, preferably so that the lower acute edge 8 of the holder protrudes from the ceiling surface over a predetermined distance 31. In another case the holder can be inserted such that the lower acute edge lies at the same height as the ceiling surface. The skilled person will appreciate that the predetermined distance 31 substantially equals zero in that case.

The holder is then secured in the ceiling opening. Preferably by clamping the holder using the leaf springs 14. This clamping is a first clamping which occurs passively, more specifically without active manipulation on the part of the user. The positioning of the leaf springs in combination with the size of the ceiling opening has the result that insertion of the holder into the opening realizes a clamping automatically, so passively. A second clamping can strengthen the first clamping by pushing the leaf springs further outward using a screw element 20. The screw element 20 can be tightened through drilled hole 19 so that these leaf springs push further against the side surfaces of ceiling opening 22.

The insert is inserted into the holder opening, preferably until the insert hits step 11. In this way the insert 42 can be arranged at a predetermined position in the holder opening. The outer surface 43 of insert 42 can be provided with at least one notch 49. This facilitates reception of a throughfeed element 49, this being easy particularly in cases where an installer wishes to remove the insert from the holder opening again.

After insertion of the holder, and preferably after insertion of the insert, a finish can be provided with plaster and/or paintwork 48. After plaster and/or paint has been applied around the holder the insert is removed from the holder. Because the insert is formed as described above, the holder opening remains free of plaster and paint and can thus receive a functional module.

Functional module 32 is placed in holder opening 5 and secured there. Preferably by means of a mounting spring 38. Functional module 32 here preferably has an outer surface with a step which is positioned to collide with the inward step in the holder inner surface. The depth of functional module 32 in the holder in the mounted state can hereby be predetermined precisely. This significantly simplifies the correct placing of the functional module in the holder and therefore provides for an almost guaranteed correct placement.

Figure 8 shows a functional module 32 wherein a mounting spring 38 is clamped around the mounting surface 33 of functional module 32. Mounting spring 38 exerts here an internal tension on functional module 32 so that the mounting spring clamps around the functional module. The mounting spring further also has a protrusion whereby the spring can clamp in holder opening 5, preferably in the groove 9 of holder opening 5. This protrusion exerts an outward-directed or external tension on the holder inner surface. The combination of internal and external tension enables the mounting spring to secure the functional module in the holder opening. A plurality of mounting springs can be arranged around one functional module. This is typical when flexible plastic mounting springs are used as mounting spring for mounting the functional module 32 in the holder opening. An example of a flexible plastic mounting spring is shown in figures 13A and 13B.

The functional module has a visible surface 35 on the underside. This is the surface of the functional module which remains visible after the functional module has been built into the holder.

The mounting spring as shown in figure 8 has a clickfit portion 42 which extends from the base part 38. The clickfit portion provides for the above described external tension. In the shown embodiment the clickfit portion extends upward. It is also possible for the clickfit portion to extend distally away from the base part, and combinations thereof are also possible. The clickfit portion ensures that the spring can be snapped easily into the groove 9 of holder opening 5, whereby functional module 32 can be secured in the holder in easy manner.

The mounting outer surface can be provided with one or more mounting grooves 33a as shown in figure 14. The mounting grooves are configured to receive the mounting spring. The mounting grooves improve the fixation between mounting spring 38 and mounting outer surface 33, whereby functional module 32 can be better secured in the holder opening. Mounting grooves 33a also increase the precision with which the mounting spring is provided on the functional module. The fixation between mounting spring and functional module can be improved further by providing the mounting spring with one or more projections 40a which are directed inward. Projections 40a can hereby snap into the groove 9 of the holder. The projections are preferably arranged on the upper edge of base part 39, as for instance shown in figure 12. The skilled person will appreciate that the clickfit portions 40 and/or projections 40a can be provided on the base part 39 of mounting spring 38 with different distributions. It is preferred here for the clickfit portions 40 to be distributed substantially proportionally or symmetrically in order to provide for a balanced securing of the functional module in the holder opening.

Figures 9A and 9B show an embodiment of a mounting spring 38 with an open form and substantially annular form, wherein the mounting spring is in a first mode. This first mode is the state of mounting spring 38 in substantially unloaded state. In this state no considerable external forces, which deform mounting spring 38, apply. Figures 10A and 10B show the same mounting spring in a second mode. This second mode is the loaded state of mounting spring 38, in which mounting spring 38 has been tensioned. The second mode is for instance reached by placing mounting spring 38 around the functional module. In the second mode the mounting spring 38 will clamp around the functional module owing to the applied tension.

The skilled person will appreciate that the shape of the mounting spring preferably corresponds substantially to the shape of the mounting surface 33 of functional module 32. In determined embodiments the mounting spring is manufactured from an electrically conductive material such as for instance a spring steel. This has the advantage that a direct earthing can be provided between the functional module and the holder via the mounting spring in order to thus earth the functional module.

Figure 11 shows a side view of an embodiment of a mounting spring 39. The clickfit portions 40 extend upward from an upper side 39a of base part 39. The clickfit portion 40 can alternatively be provided on an underside 39b of base part 39. The clickfit portion preferably extends upward so that the functional module can be unsnapped easily, for instance in cases of maintenance or repairs.

Figure 12 shows an embodiment wherein mounting spring 38 is further provided with inward directed projections 40a. As already stated, this provides for an improved fixation between mounting spring 38 and functional module 32. This is particularly when functional module 32 provides a mounting groove 33a in which the projections can be received. By fixing mounting groove 33a at a predetermined distance or position relative to the visible surface 35 the depth over which the functional module is placed into ceiling opening 5 can be predetermined in simple manner.

Figures 13A and 13B show an alternative embodiment of a mounting spring 39 with a closed form. The mounting spring has here a wave shape, wherein the troughs of the wave determine the inner dimensions of the mounting spring and wherein the crests of the wave determine the outer dimensions of the mounting spring. The wave shape enables the mounting spring to be stretched at least slightly in order to increase the inner dimensions so that an internal tension is obtained in this way. This alternative mounting spring can thus be placed around a functional module. The crests can then provide for an external tension whereby the functional module can be clamped in the holder with the mounting spring.

Figure 14 shows a functional module 32 on which mounting grooves 33a are provided on the mounting surface 33. These are typically configured to receive the mounting spring. In determined embodiments the mounting groove 33a receives the base part 39 of the mounting spring, and the mounting grooves can be configured to receive projections 40a. The figure shows an embodiment with two mounting grooves. It will be apparent that an embodiment with one mounting groove can also be realized.

### List of reference numerals:

- 1.: Holder
- 2.: Holder inner surface
- 3.: Holder outer surface
- 4.: Upper surface
- 5.: Holder opening
- 6.: Longitudinal central axis
- 7.: Earthing connection
- 8.: Lower edge of the holder
- 9.: Angle
- 10.: Groove
- 11.: Inward step
- 12.: Step distance
- 13.: Centring pin opening
- 14.: Leaf spring
- 15.: First zone
- 16.: Second zone
- 17.: Lower plate edges
- 18.: Height
- 19.: Drilled hole
- 20.: Screw element
- 21.: Ceiling
- 22.: Ceiling opening
- 23.: Positioning plate
- 24.: Connecting element
- 25.: Centring pin
- 26.: First portion
- 27.: Second portion
- 28.: Screw pin
- 29.: Guide
- 30.: Spacer
- 31.: Distance
- 32.: Functional module
- 33.: Mounting outer surface
- 33a: Mounting groove
- 34.: Step
- 35.: Visible surface
- 36.: Acute edge
- 37.: Fixing element
- 38.: Mounting spring
- 39.: Base part
- 40.: Clickfit portion
- 40a: Projection
- 41.: Curve
- 42.: Insert
- 43.: Insert outer surface
- 44.: Insert inner surface
- 45.: Peripheral edge
- 46.: Protrusion
- 47.: Central zone
- 48.: Plaster and/or paint
- 49.: Notch

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention is not therefore limited to the embodiments described herein, but is defined in the claims.

The invention is further combinable with a holder for mounting a functional module on a ceiling, wherein the holder has a holder outer surface with outer dimensions suitable for fitting in a ceiling opening in the ceiling, wherein the holder has a holder inner surface which defines a holder opening suitable for mounting the functional module in, and wherein the holder inner surface and the holder outer surface converge at the position of a lower acute edge of the holder, wherein the holder outer surface extends upward obliquely and outward from the lower acute edge and wherein the holder inner surface extends upward at least 2 mm, preferably at least 3 mm from the lower acute edge and then has an inward step before extending further upward.

It has been found that the holder has several advantages for providing the functional module rapidly and firmly on a ceiling with minimal risk of ceiling damage and so that the whole can at the same time be finished sleekly and meticulously so that substantially only the functional module is visible.

This is because it is the case that the holder can be placed rapidly and firmly in the ceiling opening and that the functional module can be mounted rapidly and at the same time precisely in the holder opening of the holder in that the holder inner surface extends upward at least 3 mm and then has an inward step. With the inward step a stop edge is provided whereby not only a functional module but also attachments such as inserts can be placed rapidly and accurately at a desired location in the holder opening. Practical research has shown that the precision resulting from the accurate placing ensures that a meticulous result can be achieved. The inventor has also found that the minimum extension of at least 3 mm reduces the risk of contaminants, such as paint masses or plaster masses, accumulating in the corner of the step, which can affect the accurate mounting of the functional module.

The lower acute edge also ensures that the whole can be finished meticulously with for instance plasterwork and/or paintwork so that substantially only the functional module is visible when it is mounted in the holder in the ceiling opening. The wishes of the architect or client, who desire a sleekly and meticulously finished result, can thus be met. Particularly a sleek and smooth ceiling surface wherein the functional module is incorporated precisely and wherein substantially only the functional module is visible.

It is preferably the case that the inward step extends inward over a determined step distance, and wherein the determined step distance amounts to a minimum of 0.5 mm, preferably a minimum of 1 mm and/or wherein the determined step distance amounts to a maximum of 10 mm, preferably a maximum of 8 mm. This is because practical research has shown that these dimensions of the determined step distance allow an accurate placing of the functional module in the holder opening.

It is preferably the case that the lower acute edge forms an angle of between 30° and 70°, preferably between 40° and 60°, still more preferably of substantially 45°. Practical tests have shown that these angles are favourable for finishing the holder, when it has been clamped in the ceiling opening, with for instance plaster and/or paint in order to achieve a sleek and meticulous result. Particularly when the functional module is mounted in the holder opening so that the holder is substantially no longer visible.

It is preferably the case that the mutual distance between the holder inner surface and the holder outer surface is a maximum of 18 mm, preferably a maximum of 14 mm, still more preferably substantially 9 mm. It has been found here that this mutual distance is favourable for optimally utilizing space in the ceiling opening. It is preferably the case that an average distance between the holder inner surface and the holder outer surface at the position of an upper segment of the holder is a minimum of 4 mm, preferably a minimum of 5 mm. This has the advantage that the holder has sufficient surface area at the position of the segment to receive items such as leaf springs, screws, parts of a mounting spring and the like.

It is preferably the case that the holder is provided with at least three leaf springs which are distributed over and extend along the holder outer surface in order to fixedly clamp the holder in the ceiling opening. The leaf springs ensure that the holder is able to secure itself in the ceiling opening in that the leaf springs provide an initial tension whereby the holder can clamp itself in the opening. The initial tension facilitates the mounting of the holder in the ceiling opening. This is because the holder remains neatly in the ceiling opening when an installer wishes to provide additional stability and/or fixation, for instance using glue or tightening techniques.

It is preferably the case that the leaf springs each have a first zone lying against and being connected to an upper surface of the holder; and each have a second zone floating alongside a holder outer surface of the holder in order to provide a first initial radial tension when the holder is being placed in the ceiling opening. Provided in this way is a corner and/or curve between the first and second zone whereby the leaf spring can provide for a clamping tension whereby the holder can secure itself in the holder opening. Insertion of the holder into the ceiling opening is also facilitated in that the leaf springs guide the holder when it being placed in the ceiling opening.

The second zones preferably float at a floating distance of a minimum of 1 mm, preferably a minimum of 2.5 mm, still more preferably 3 mm. The floating distance is measured between the point of the leaf spring removed furthest from the holder outer surface and the holder outer surface. This minimum distance is advantageous for obtaining a suitable clamping and for arranging finishing material such as plasterwork between the holder outer surface and the ceiling opening.

It is preferably the case that the holder is provided with a drilled hole which opens into the outer surface at the position of each of the leaf springs and wherein a screw element is provided to push the leaf springs outward from the holder. Because a screw element can be screwed through the drilled hole in order to push a leaf spring outward it is possible to ensure that the holder can secure itself firmly in the ceiling opening. This has the advantage that the holder and the functional modules cannot be accidentally removed from the ceiling opening by influencing factors such as force of gravity or another force which could pull or push the functional module out of its desired position. By combining the screw elements with the leaf springs it is ensured that little to no damage is done to the ceiling, particularly to the inner surface of the ceiling opening. This also reduces the danger of damage to the plasterwork and/or paintwork. This is because screw elements per se, without leaf springs, cause a point load at the position where the screw elements make contact with and/or turn into the inner surface of the ceiling opening. In cases where ceilings have a determined brittleness cracks may occur due to the point load. By combining the screw elements with the leaf springs the point load is distributed over the surface of the leaf springs, whereby less or no damage such as fractures occurs.

The distance between the lower edge of the leaf spring and the lower acute edge of the holder is preferably greater than 5%, preferably greater than 10% and smaller than 90% of the distance between the lower acute edge of the holder and the upper surface of the holder in order to provide for a suitable clamping of the holder and so that the leaf springs can make contact with the inner surface of the ceiling opening at a correct position.

It is preferably the case that the holder has a longitudinal central axis; and wherein the leaf springs have lower plate edges and are arranged so that the lower plate edges are situated at least at a determined height relative to the lower acute edge of the holder, and wherein the determined height is measured parallel to the longitudinal central axis and amounts to at least 0.8 cm, preferably at least 1 cm. Practical research has shown that it is advantageous to give the lower plate edges at least a determined height, such that this determined height is greater than the usual thicknesses of finishing layers such as for instance layers of plaster and/or paint. This minimizes the risk of damage to the ceiling.

It is preferably the case that the holder inner surface is provided with a groove for receiving a fixing element to mount the functional module at least partially in the holder opening. The groove ensures that the functional module can be mounted easily in the holder opening so that it can be incorporated herein in a rapid manner.

The invention is further combinable with an aspect wherein a set comprises a functional module and a holder with one or more of the features as described above. More specifically, the aspect of the invention makes the provision that the functional module has a mounting outer surface having a form which is at least partially inverse to the holder inner surface so that the functional module fits with the mounting outer surface in the holder inner surface of the holder. Because the mounting outer surface has a form which is at least partially inverse to the holder inner surface, the functional module can be incorporated in the holder in simple manner and, at the same time, a neat result can be achieved. The skilled person will appreciate that the advantages as described above and below in respect of the holder also apply to the holder in the set of the holder and the functional module.

It is preferably the case that the mounting outer surface has a step with which the mounting outer surface knocks against the inward step of the holder inner surface during insertion of the functional module into the holder. The step of the mounting outer surface of the functional module has the advantage that the functional module can be placed into the holder opening in accurate manner and at a desired location. It also prevents that the functional module can be pushed too far into the holder opening.

It is preferably the case that the functional module further has a visible surface which has at least at the position of the edge with the mounting outer surface an acute edge therewith and which extends upward and inward from this edge. Because the visible surface of the functional module has an acute edge at the position of the mounting outer surface, the visual effect is created of the functional module being provided directly and seamlessly on the ceiling. Substantially only the visible surface of the functional module is thus visible. When a recessed spotlight is for instance mounted in the holder, only the light reflector of the recessed spotlight is thus visible, whereby a particularly neat result is created. The recessed spotlight is thus provided on the ceiling in a way wherein the recessed spotlight is built in fully seamlessly in that it appears as if the recessed spotlight connects directly to the ceiling and the finishing, typically the plaster and paint finish.

The invention is further combinable with a set of a holder and an insert for mounting a functional module on a ceiling, wherein the holder has a holder outer surface with outer dimensions so that the holder is placeable in a ceiling opening in the ceiling; and wherein the holder has a holder inner surface which defines a holder opening in which the functional module is mountable; wherein the insert is manufactured from a flexible material and has insert outer dimensions for pressing against the holder inner surface when the insert is placed in the holder opening of the holder.

A functional module is typically provided on a ceiling or wall as follows: An opening is made in which the holder can be placed. The holder is placed in the opening and the whole is typically finished using plasterwork and/or paintwork. It is desirable here that plastering mortar and/or paint can be applied rapidly on the one hand and in a precise manner on the other. Because the insert is manufactured from a flexible material and has insert outer dimensions for pressing against the holder inner surface, the insert can be placed in the holder in simple manner and thus protect the inner side of the holder against plaster and/or paint which may accidentally end up there if work is not carried out sufficiently precisely.

It is further the case that, because the insert is manufactured from a flexible material, a flexibility is imparted to the insert which ensures that the insert can secure itself in the holder. This is of interest for ensuring that the insert remains neatly in the holder during finishing with for instance plasterwork and/or paint. In addition, the insert ensures that plastering and/or painting can be performed rapidly without having an adverse effect on the precision and the aesthetic result of the work.

It is also possible to ensure with the finish that the holder is almost invisible, preferably wholly invisible. After finishing with plaster and/or paint a functional module can be mounted in the holder. In this way the functional module can be provided on the ceiling or wall in a manner wherein the holder is concealed and so that only the functional module is visible.

It has thus been found here that with the holder and the insert with the above stated features a set can be provided whereby a functional module can be provided on a ceiling or wall in rapid and simple manner. It has also found that this provision can be performed in both a neat and precise manner, particularly using the insert.

It is preferably the case that the insert has an insert outer surface having a shape related to a holder opening shape so as to press a whole peripheral edge of the insert outer surface against the holder inner surface in order to substantially eliminate a space between the peripheral edge and the holder inner surface. Because the insert outer surface of the insert has a shape related to the shape of the holder opening shape, it is ensured that a whole peripheral edge of the insert outer surface is pressed against the holder inner surface. The space between the peripheral edge and the holder inner surface can hereby be substantially eliminated. This has the advantage that fewer outside contaminants can find their way into the holder opening. Examples of contaminants are quantities of plastering mortar and/or paint which may accidentally end up in the holder opening. In order to make the functional module fit in the holder opening with a perfect fit it is advantageous if no contaminants are present here. Because the shape of the insert outer surface corresponds with the holder opening shape, an installer, for instance a painter, can provide the paint to finish the whole of the holder in the ceiling in rapid manner without this taking away from the meticulous appearance of the final result of their work.

An insert preferably has a shape whereby a peripheral lateral surface between the insert inner surface and the insert outer surface makes contact with the holder inner surface along a whole periphery of the insert and presses thereagainst when it is placed in the holder opening. This improves the protection against contaminants still further, and provides for a clamping of the insert in the holder opening.

It is preferably the case that the insert tapers from the insert outer surface to an insert inner surface. This ensures that a user, for instance an installer or a painter, can provide the insert in the holder opening more easily. The tapering causes the peripheral sides between the insert outer surface and the insert inner surface to approach each other obliquely. More specifically, the tapering creates an angle between the insert inner surface and the peripheral sides, so that the insert is not only better able to secure itself in the holder opening but can also be arranged more easily in the holder opening.

It is preferably the case that the insert is provided to receive at least one protrusion. In this way the insert can be provided with a protrusion so that the manageability of the insert is increased. The insert typically secures itself fairly firmly in the holder opening, whereby it can be challenging for an installer to remove the insert from the opening of the holder again. The protrusions on the one hand aid the skilled person in easily arranging the insert in the holder opening and on the other in removing the insert from the holder opening again, typically after the finishing, such as the plastering and painting, has been carried out. Because the insert is able to receive the protrusion, the protrusion can be provided at a desired moment. For instance after painting has been carried out.

It is preferably the case that the insert outer surface is provided with one or more protrusions. In this form the protrusions are already provided on the insert, this increasing the manageability of the insert during insertion of the insert into the holder opening and removal therefrom. The one or more protrusions are in this case preferably foldable with the intention of yielding when an installer brushes over the insert with a finishing tool, for instance a paintbrush or plastering skimmer.

It is preferably the case that the one or more protrusions are situated in a central zone of the insert outer surface and extend distally from the insert outer surface over at least 0.5 cm, preferably 1 cm. In this way the protrusions can be easily held, and it is ensured that the manageability of the insert is improved.

It is preferably the case that a functional module is receivable in the holder opening. An example of a functional module is a light fixture, such as a recessed spotlight.

It is preferably the case that the insert is manufactured from a cardboard. Cardboard is typically understood to mean: heavy paper, compressed paper, compressed paper layers with optional gluing, or combinations thereof. This has the advantage that the insert can be recycled in simple manner when it is no longer needed. It is preferably the case that the insert is provided with a protective layer to protect the insert. The protective layer is preferably at least arranged on the insert outer surface.

A further aspect of the invention provides a method for placing a holder in a ceiling. The method comprises here of: - providing a ceiling opening with predetermined dimensions in the ceiling; - providing a holder with outer dimensions which are a predetermined size smaller than the dimensions of the ceiling opening; - securing the holder in the ceiling opening; - inserting an insert into a holder opening of the holder; - performing a finishing step; - removing the insert. Using this method an installer can provide a holder on a ceiling in rapid and simple manner and at the same time give it a sleek and meticulous finish. A functional module can thus also be provided on a ceiling in simple and precise manner by placing the functional module in the holder.

Tests have shown that by arranging the insert in the holder opening the functionality of the holder is optimally preserved because the opening is protected against intruding finishing materials such as plaster or paint. The finishing step can hereby be performed in rapid and simple manner, and a neatly finished result can at the same time be achieved. It is preferably the case that the finishing step comprises one or more of plasterwork and paintwork. The holder in the ceiling opening can thus be perfected with the plasterwork and paintwork.

It is preferably the case that the dimensions of the ceiling opening and/or dimensions of the holder are chosen such that a distance (Dk) between the outer surface of the holder and the ceiling opening amounts to a minimum of 1.5 mm, preferably amounts to a minimum of 2 mm, still more preferably a minimum of 2.4 mm. Practical research has shown that this minimum distance is advantageous for providing a better fixation of the holder in the ceiling surface. This is because it has been found that sufficient intermediate space is thus given to finishing materials such as concrete or plaster to flow or creep between the holder and the inner wall of the ceiling opening. In this way the intermediate space can be filled with more concrete or plaster mass, whereby the holder can be secured better.

It is preferably the case that the step of removing the insert comprises of: - handling the insert in order to pull the insert from the holder. The insert can hereby be removed in simple and rapid manner and at the same time without causing damage.

The invention is further combinable with a set of a holder and a mounting spring and a functional module for mounting the functional module at the position of a ceiling, wherein the holder has a holder outer surface with outer dimensions suitable for fitting in a ceiling opening in the ceiling; and wherein the holder has a holder inner surface which defines a holder opening suitable for mounting the functional module in; wherein the mounting spring has outer dimensions which are smaller than the holder opening in a first mode and which are provided to be greater than the holder opening in a second mode; to provide an internal tension when the mounting spring is placed around the functional module, whereby the mounting spring clamps round the functional module on one side and to provide an external tension whereby the mounting spring clamps in the holder opening on the other.

The invention is based on the insight that the holder can be secured in a ceiling opening and that the functional module can be fixed in the holder opening of the holder in rapid, simple and user-friendly manner using the mounting spring, such that the functional module can be provided on the ceiling in a rapid and simple manner. It is desirable, particularly in the case of high ceilings, that the functional module can be provided on the ceiling in a rapid and simple manner. It is also desirable that the functional module can be subjected to maintenance in a user-friendly manner.

For this purpose the invention provides a set of the holder, the functional module and the mounting spring. The holder has a holder opening in which the functional module can be mounted in a simple and rapid manner using the mounting spring. It has namely been found that by designing the outer dimensions of the mounting spring so that the mounting spring is smaller than the holder opening in a first mode an internal tension is imparted to the mounting spring. The internal tension enables the mounting spring to clamp itself around the functional module. External tension is also imparted in that in a second mode the outer dimensions of the mounting spring are greater than the dimensions of the holder opening. The external tension enables the mounting spring to clamp itself in the holder opening. Owing to this internal and external tension of the mounting spring the functional module can be clamped in the holder opening in rapid and simple manner. It is here not necessary to rely on additional tools or complex fixing means to mount the functional module in the holder opening or to remove the functional module from the holder opening again. This ensures that the functional module can be easily subjected to maintenance, if necessary.

It is preferably case that the holder inner surface is provided with a groove for receiving the mounting spring at least partially. The groove ensures that the functional module can be mounted in the holder opening in an accurate manner and at a predetermined position. The groove also ensures that the fixation of the functional module in the holder opening improves in that the mounting spring can be received therein. In determined embodiments a plurality of grooves are arranged at different heights, as seen from a lower edge of the holder inner surface. This makes it possible to choose how deep the functional module is to be inserted into the holder opening.

It is preferably the case that the mounting spring is manufactured integrally from a material chosen from a spring steel and a plastic. Because the mounting spring is manufactured integrally, advantages are provided not only in respect of production engineering but also user-friendliness. This is because the integral piece can be produced in simple manner from available material, being the spring steel or the plastic, and can easily be used as one piece, this in contrast to cases where complex techniques and/or complex parts must be relied on to secure the functional module in the holder.

It is preferably the case that the mounting spring has a base part with a shape substantially corresponding with the shape of the outer surface of the functional module. The base part can hereby clamp itself precisely around the functional module using the internal tension of the mounting spring. It is preferably the case that the base part has a curve, a centre of curvature of which lies on the inner side of the mounting spring so that a desired internal tension is imparted to the mounting spring when the mounting spring is placed around the functional module.

It is preferably the case that the mounting spring has a clickfit portion which extends from the base part and has a form for being received at least partially by the groove of the holder inner surface or for snapping behind an upper edge of the holder. Tests and simulations have shown that the clickfit portion ensures that the functional module can not only be easily snapped into and secured in the holder opening, but can also unsnapped again. This is particularly advantageous when it is a wish to remove the functional module from the holder opening again, for instance when it is desired that it is subjected to maintenance.

It is preferably the case that the clickfit portion is formed by a plurality of upper protrusions. The protrusions can be manufactured in simple manner and, because the protrusions extend upward, the clickfit portion reaches the groove before the base part of the mounting spring. This provides space for creating the external tension whereby the mounting spring can clamp against the holder inner surface of the holder opening, preferably can clamp itself in the groove. It is preferred for the upward protrusions to be distributed symmetrically over the mounting spring in order to provide a uniform clamping. It is preferably the case that each of the upper protrusions has a curve away from the inner side of the mounting spring, which curve engages in the groove when the external tension is applied or wherein the curve of the upward protrusions engages over an upper edge of the holder. In this way the curves of the plurality of protrusions create an external tension whereby the mounting spring and therefore the functional module can clamp themselves accurately and precisely in the holder opening or holder grooves. The protrusions extending upward also provides for a curve whereby the mounting spring can not only fixedly snap itself using the external tension, but can also be unsnapped again. This ensures that the functional module can be removed from the holder opening again in a user-friendly manner, for instance in cases where it is desired to subject the module to maintenance.

It is preferably the case that the holder inner surface extends upward from a lower acute edge and then has an inward step before extending further upward, and wherein the functional module has a mounting outer surface having a form which is at least partially inverse to the holder inner surface so that the functional module fits with the mounting outer surface in the holder inner surface of the holder, wherein the mounting outer surface has a step with which the mounting outer surface knocks against the inward step of the holder inner surface during insertion of the functional module into the holder and wherein the external tension of the mounting spring is at least partially upward in order to press the step against the inward step. Because the holder is configured with the inward step, a stop edge is provided whereby not only a functional module but also inserts or other attachments can be placed in the holder opening in accurate manner and at a desired location.

The upward direction of the external tension of the mounting spring presses the step of the functional module against the inward step of the holder, whereby the functional module can be arranged at a predetermined position in the holder opening in rapid manner and with precision. This precision and the lower acute edge of the holder ensure that the whole can be finished meticulously with for instance plasterwork and/or paintwork, so that substantially only the functional module is visible when it is mounted in the holder and provided on the ceiling.

The invention is further provided to be combined with an aspect of a method for placing a holder and a functional module in a ceiling, wherein the method comprises of: - providing a ceiling opening with predetermined dimensions in the ceiling; - providing a holder with outer dimensions which are a predetermined size smaller than the dimensions of the ceiling opening; - securing the holder in the ceiling opening; - arranging the mounting spring around the functional module; and - inserting the functional module with the mounting spring into the holder opening. In this way an installer can provide the functional module on a ceiling in a rapid, simple and at the same time user-friendly manner. This is because the mounting spring ensures that an installer need not perform complex operations to secure the functional module in the holder opening. In addition, it is not necessary to rely on complex connecting mechanisms to secure the functional module in the holder opening. The mounting spring can simply be arranged on the functional module.

The mounting spring is preferably arranged on the functional module by snapping the mounting spring fixedly around a periphery of the functional module. The functional module can further be mounted in the holder opening in rapid and simple manner.

The mounting spring is preferably received by a mounting groove which is provided on the mounting surface of the functional module. More preferably, this takes place by snapping the mounting spring fixedly into the groove of the holder. In this way the functional module can be arranged in the holder opening in accurate manner and also be easily released again if desired, for instance when maintenance or replacement of the functional module is necessary.

## Claims

1. Set of a holder and a positioning plate for building the holder into a ceiling with a ceiling opening with predetermined dimensions, wherein
the holder has outer dimensions so that the holder is placeable in the ceiling opening; wherein the holder comprises at least one leaf spring for clamping itself in the ceiling opening;
wherein the holder has a holder inner surface which defines a holder opening in which a functional module is mountable; and wherein the positioning plate has outer dimensions which are considerably greater than the predetermined dimensions of the ceiling opening so as to position the holder at a predetermined position and such that a lower edge of the at least one leaf spring is positioned at a determined ceiling surface - edge distance, wherein the ceiling surface - edge distance is measured between a ceiling surface and the lower edge of the leaf spring and is at least 0.8 cm.

2. Set according to the foregoing claim, wherein the holder is provided with at least three leaf springs which are distributed over and extend along the holder outer surface in order to clamp the holder fixedly in the ceiling opening.

3. Set according to the foregoing claim, wherein the leaf springs each have a first zone lying against and being connected to an upper surface of the holder; and each have a second zone floating alongside a holder outer surface of the holder in order to provide a first initial radial tension when the holder is being placed in the ceiling opening.

4. Set according to the foregoing claim, wherein the outer dimensions of the positioning plate are selected such that the holder protrudes from the ceiling over a predetermined distance measured between a ceiling surface and a lower edge of the holder.

5. Set according to the foregoing claim, wherein the positioning plate is provided with one or more spacers in order to provide the predetermined distance.

6. Set according to the foregoing claim, wherein the one or more spacers comprise one or more string cords having predetermined thicknesses, preferably the same thickness, in order to provide the selected distance.

7. Set according to the foregoing claim, wherein the string cords are configured so that the string cords are exchangeable on the positioning plate.

8. Set according to any one of the foregoing claims, wherein the positioning plate is further provided with a first connecting element for being connected removably to the holder.

9. Set according to any one of the foregoing claims, wherein the positioning plate is provided with at least two connecting elements so as to be connected removably to the holder, and wherein at least one of the two connecting elements is arranged movably on the basic structure in order to move over and/or through the basic structure.

10. Set according to the foregoing claim, wherein the holder inner surface is provided with one or more centring pin openings and wherein at least one of the at least two connecting elements is provided with a centring pin, preferably two of the at least two connecting elements are provided with a centring pin, and wherein the centring pin has dimensions smaller than dimensions of the one or more centring pin openings so as to be placeable therein.

11. Set according to any one of the claims 9-10, wherein the at least two connecting elements are configured to be fixed relative to the positioning plate.

12. Method for placing a holder in a ceiling, wherein the method comprises of:
- providing a ceiling opening with predetermined dimensions in the ceiling;
- providing a set according to any one of the foregoing claims;
- providing the holder in the ceiling opening;
- connecting the holder to the positioning plate with outer dimensions which are considerably greater than the predetermined dimensions of the ceiling opening;
- inserting the holder into the ceiling opening until the positioning plate touches the ceiling, all this such that the holder is brought into a predetermined position;
- clamping the holder in the ceiling opening with at least one leaf spring in order to secure the holder in the ceiling opening;
- removing the positioning plate from the holder.

13. Method according to the foregoing claim, wherein the predetermined position is chosen so that a lower edge of the at least one leaf spring is positioned at a predetermined ceiling surface - edge distance, wherein the ceiling surface - edge distance is measured between a ceiling surface and the lower edge of the leaf spring and is at least 0.8 cm.

14. Method according to the foregoing claim, wherein the method further comprises of:
- providing a spacer on the positioning plate in order to influence the predetermined position.

15. Method according to any one of the foregoing claims 12-14, wherein the method further comprises of:
- placing a functional module in a holder opening of the holder.
